(19) Europäisches Patentamt
European Patent Office
Office européen des brevets

(11) EP 1 943 258 B1

(12) **EUROPÄISCHE PATENTSCHRIFT**

(45) Veröffentlichungstag und Bekanntmachung des Hinweises auf die Patenterteilung:
**29.09.2010 Patentblatt 2010/39**

(21) Anmeldenummer: **06807515.9**

(22) Anmeldetag: **24.10.2006**

(51) Int Cl.:
***C07F 5/02*** (2006.01) ***C07B 41/00*** (2006.01)

(86) Internationale Anmeldenummer:
**PCT/EP2006/067731**

(87) Internationale Veröffentlichungsnummer:
**WO 2007/048799 (03.05.2007 Gazette 2007/18)**

(54) **VERFAHREN ZUR HERSTELLUNG FUNKTIONALISIERTER FÜNFRINGHETEROCYCLEN UND DEREN VERWENDUNG**

METHOD FOR THE PRODUCTION OF FUNCTIONALIZED FIVE-RING HETEROCYCLES, AND USE THEREOF

PROCEDE DE PRODUCTION D'HETEROCYCLES A CINQ CHAINONS FONCTIONNALISES ET LEUR UTILISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.10.2005 DE 102005051164**

(43) Veröffentlichungstag der Anmeldung:
**16.07.2008 Patentblatt 2008/29**

(73) Patentinhaber: **Chemetall GmbH**
**60487 Frankfurt am Main (DE)**

(72) Erfinder:
- **EMMEL, Ute**
**65929 Frankfurt Am Main (DE)**
- **RITTMEYER, Peter**
**65843 Sulzbach/Taunus (DE)**
- **WIETELMANN, Ulrich**
**61381 Friedrichsdorf (DE)**

(74) Vertreter: **Uppena, Franz et al**
**Chemetall GmbH**
**Patente, Marken & Lizenzen**
**Trakehner Strasse 3**
**60487 Frankfurt/Main (DE)**

(56) Entgegenhaltungen:
**EP-A1- 1 403 271**

- **DATABASE CA [Online] CHEMICAL ABSTRACTS SERVICE, COLUMBUS, OHIO, US; HUANG, SHI-WEN ET AL: "Preparation of heteroarylboron compounds" XP002420640 gefunden im STN Database accession no. 131:144631 & WUHAN DAXUE XUEBAO, ZIRAN KEXUEBAN , 45(2), 160-164 CODEN: WTHPDI; ISSN: 0253-9888, 1999,**
- **PARRY, PAUL R. ET AL: "5-Formyl-2-furylboronic acid as a versatile bifunctional reagent for the synthesis of .pi.-extended heteroarylfuran systems" ORGANIC & BIOMOLECULAR CHEMISTRY , 1(9), 1447-1449 CODEN: OBCRAK; ISSN: 1477-0520, 2003, XP002420638**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein Verfahren zur Herstellung von funktionalisierten CH-aciden Fünfringheterocyclen.

Viele pharmazeutische Wirkstoffe und Agrochemikalien enthalten das Strukturelement eines Fünfringheterocyclus. Zur Herstellung unterschiedlicher Fünfringheterocyclen existieren vielfältige Synthesestrategien; neben Ring aufbauenden Synthesen, so genannten "de-novo-Synthesen", können auch einfache, kommerziell erhältliche Fünfringheterocyclen durch Umsetzungen mit beispielsweise metallorganischen Reagenzien funktionalisiert, das heißt in komplexere gewünschte Moleküle überführt werden. Beispielsweise kann Thiophen mit Organolithiumverbindungen (R-Li) in 2-Stellung metalliert und anschließend mit Ethylenoxid in Thiophenethanol umgewandelt werden:

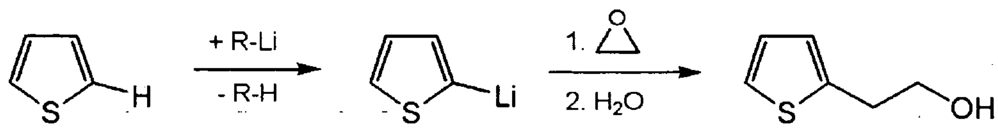


R = Alkyl, Aryl.

Thiophenethanol ist ein wichtiges Zwischenprodukt bei der Herstellung von Thrombosehemmern wie Ticlopidin oder Clopidogrel (Sanofi).

Nachteil dieser Synthese sind die relativ hohen Kosten der Organolithiumverbindungen. Weiterhin sind die metallierten Zwischenprodukte sehr häufig thermisch instabil, das heißt sie zersetzen sich oder sie reagieren in unerwünschter Weise mit Komponenten des Reaktionssystems. Dies gilt insbesondere für Reaktionen des Metallierungsreagenzes R-Li oder der lithiierten Zwischenstufe mit etherischen Lösemitteln, beispielsweise ringförmigen Ethern wie Tetrahydrofuran (THF) oder 2-Methyltetrahydrofuran (MTHF). Infolgedessen müssen metallorganische Transformationen an Fünfringheteroaromaten in der Regel bei tiefen Temperaturen, das heißt bei Temperaturen unter -10°C, häufig sogar unter -40°C, durchgeführt werden.

Ein wesentlicher Fortschritt zur Verbesserung der Ökonomie konnte durch den Ersatz von Organolithiumverbindungen durch die Kombination Lithiummetall mit einem Wasserstoffakzeptor erreicht werden (DE-C-19849197).

Dabei dient billiges Lithiummetall als Lithiierungsreagenz und der ebenfalls zugegebene Wasserstoffakzeptor, beispielsweise ein offenkettiges oder zyklisches 1,3-Dien oder ein 1-Arylolefin, verhindert auf Hydrierung zurückgehende Nebenreaktionen, beispielsweise:

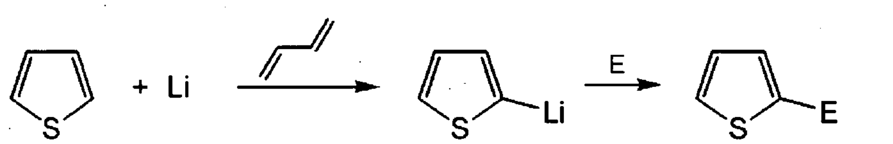


E = Elektrophil

Nachteil des obigen Verfahrens ist jedoch, dass der lithiierte Heterocyclus in etherischen Lösemitteln nur unzureichend stabil ist.

Die metallierten Heterocyclen, die als Zwischenstufen entstehen, werden durch Umsetzung mit Elektrophilen in Folgeprodukte, beispielsweise Boronsäuren, umgewandelt. Um unerwünschte Nebenprodukte zu vermeiden, erfolgt diese Umwandlung bei sehr tiefen Temperaturen. So wird beispielsweise 2-Furanboronsäure aus 2-Furyllithium und Triisopropylborat bei -70°C in THF dargestellt (W.T. Thompson, J. Gaudino, J. Org. Chem. 1984, 49, 5237-5243):

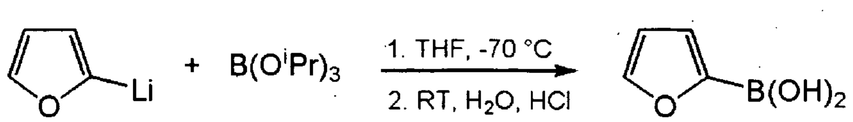


90 %

Es ist weiterhin möglich, das zur Deprotonierung verwendete Organolithiumreagenz, beispielsweise Butyllithium oder Cyclohexyllithium, in-situ darzustellen und die Lithiierungsreaktion sowie die Reaktion mit einem Elektrophil im Eintopfverfahren durchzuführen (DE-A-10150615). So kann beispielsweise 5-Formylfuranboronsäure wie folgt dargestellt werden:

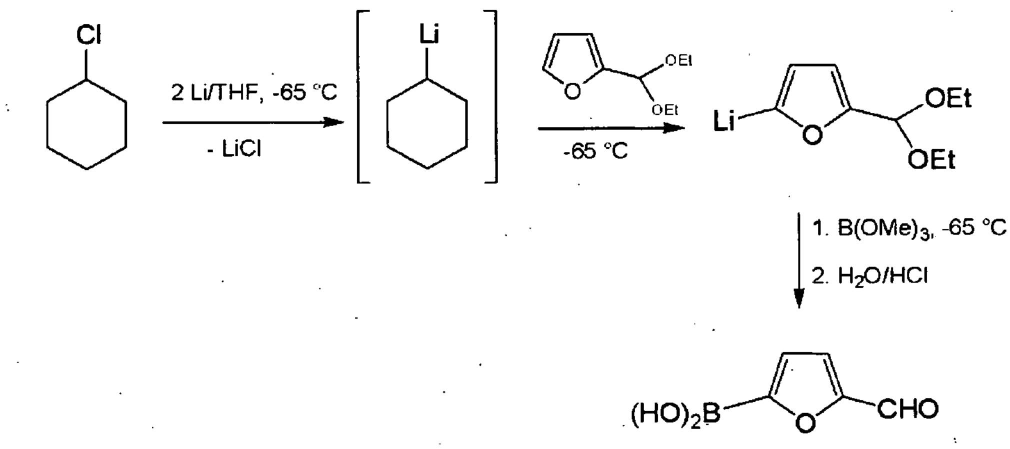


Dabei wird das lithiumorganische Reagenz, hier Cyclohexyllithium, in Gegenwart des zu metallierenden Substrates, hier Furfuraldiethylacetal hergestellt und nach vollständiger Reaktion mit dem Elektrophil, hier Trimethylborat, umgesetzt. Nachteil dieses Verfahrens ist, dass als Nebenprodukt der Synthese Lithiumchlorid (LiCl) gebildet wird, was die Aufarbeitung stört. Weiterhin muss die gesamte Synthese unter kryogenen Bedingungen um -65°C gefahren werden, was entsprechend aufwändig ist.

Weiterhin ist es bekannt, Boronsäuren durch so genannte in-situ-quench-Technik (in-situ-quench: "ISQ") herzustellen. Dazu wird das Substrat, beispielsweise ein Fünfringheterocyclus, im Gemisch mit dem Elektrophil - in der Regel ein Borsäureester - und einem Lösemittel, beispielsweise THF, vorgelegt und das organometallische Metallierungsmittel zugegeben. Auf diese Weise reagiert das lithiierte Intermediat direkt mit dem Elektrophil ab, das heißt es kann nicht zu unerwünschten Nebenreaktionen kommen (W. Li, D.P. Nelson, M.S. Jensen, R.S. Hoerrner, D. Cai, R.D. Larsen, P.J. Reider, J. Org. Chem. 2002, 67, 5394-5397).

Beispielsweise kann 5-Formylfuranboronsäure auf diese Art in guter Reinheit gewonnen werden (EP-A-1403271):

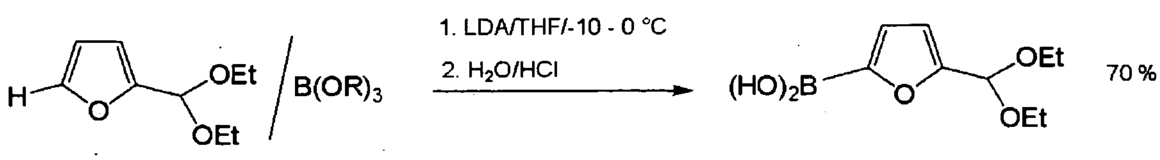


LDA = Lithiumdiisopropylamid

Nachteil dieser Methode ist, dass die Synthese zwar bei deutlich höheren als den üblicherweise angewendeten kryogenen Temperaturen, aber noch immer bei Temperaturen unter 0°C durchgeführt werden muss. Weiterhin entsteht als Nebenprodukt ein Amin, in diesem Fall Diisopropylamin, das abgetrennt und entsorgt werden muss.

Aufgabe der vorliegende Erfindung ist es daher, ein Verfahren zur Herstellung von funktionalisierten Fünfringheterocyclen bereitzustellen, das die Nachteile des Standes der Technik überwindet. Insbesondere soll es erlauben, CH-acide Fünfringheterocyclen durch eine metallbasierte Technik in vielfältiger Weise zu derivatisieren.

Dabei soll:

- das Metallierungsreagenz gut verfügbar und preiswert sein,
- das Verfahren ungünstige Reaktionsbedingungen, insbesondere tiefe Temperaturen vermeiden,

- das Verfahren direkt, das heißt ohne Bildung oder Isolierung des metallierten Zwischenproduktes, das erwünschte organische Derivatisierungsprodukt liefern,

- das Verfahren apparativ einfach durchführbar sein, das heißt es sollte als Eintopfverfahren ausgeführt werden können.

Erfindungsgemäß wird die Aufgabe überraschenderweise durch die Merkmale des Hauptanspruchs gelöst. Vorzugsweise Ausgestaltungen finden sich in den Unteransprüchen.

Dabei wird erfindungsgemäß die Aufgabe durch ein Verfahren gelöst, bei dem als Metallierungsreagenz die Kombination aus einem Alkalimetall oder einem Gemisch aus Alkalimetallen, zusammenfassend nachfolgend kurz Alkalimetallkomponente genannt, und einem Wasserstoffakzeptor genommen wird und die Metallierung und Derivatisierung des zu funktionalisierenden Fünfringheterocyclus, nachfolgend kurz Fünfringsubstrat genannt, mit einem Elektrophil ganz oder teilweise unter in-situ-Quenchbedingungen durchgeführt werden. Im Unterschied zum Stand der Technik findet die Bildung der metallierungsaktiven Spezies (das Reaktionsintermediat aus 1,3-Dien bzw Arylolefin und Alkalimetallkomponente) in Gegenwart sowohl des Fünfringsubstrates als auch des Elektrophils statt. Auf diese Art und Weise lässt sich eine besonders hohe Raum-/Zeitausbeute erreichen.

Die Alkalimetallkomponente wird dabei erfindungsgemäß bevorzugt ausgewählt aus einem oder mehreren von Lithium, Natrium oder Kalium.

Das Fünfringsubstrat wird erfindungsgemäß bevorzugt ausgewählt aus CH-aciden Fünfringheterocyclen.

Der Wasserstoffakzeptor wird erfindungsgemäß bevorzugt ausgewählt aus einem oder mehreren von offenkettigen oder zyklischen, nicht substituierten oder mit Alkyl oder Vinyl substituierten 1,3-Dienen, beispielsweise Butadien, Isopren oder Cyclohexadien-1,3, oder substituierten oder nicht substituierten 1-Arylolefinen, beispielsweise Styrol, Methylstyrol oder 1,1-Diphenylethen.

Als Elektrophil können erfindungsgemäß alle Verbindung dienen, die mit carbanionischen Stoffen reagieren. Bevorzugt werden Kohlenstoff-, Bor- und Siliciumelektrophile eingesetzt.

Erfindungsgemäß bevorzugt ist es, das erfindungsgemäße Verfahren in Gegenwart eines oder mehrerer aprotischer organischer Lösemittel durchzuführen.

Dabei wird erfindungsgemäß der Wasserstoffakzeptor zur Alkalimetallkomponente dosiert oder umgekehrt. Die übrigen Reaktanden, das sind das Elektrophil und das Fünfringsubstrat, werden vor Beginn der Reaktion entweder mit dem Wasserstoffakzeptor oder der Alkalimetallkomponente gemischt. Ebenso ist es erfindungsgemäß möglich, die Gesamtmenge des Fünfringsubstrates und des Elektrophils in beliebigen Anteilen sowohl auf den Wasserstoffakzeptor als auch auf die Alkalimetallkomponente zu verteilen.

Erfindungsgemäß ist es auch möglich, Teilmengen oder die Gesamtmenge sowohl des Elektrophils als auch des Fünfringsubstrates getrennt, aber zumindest teilweise gleichzeitig mit der Vereinigung von Alkalimetallkomponente und dem Wasserstoffakzeptor dem Reaktionsgemisch zuzufügen.

In einer erfindungsgemäßen Ausführung des Verfahrens wird die Alkalimetallkomponente in einem aprotischen Lösemittel vorgelegt und der Wasserstoffakzeptor, das Fünfringsubstrat und das Elektrophil werden entweder getrennt oder in Mischung zudosiert.

In einer weiteren erfindungsgemäßen Ausführung des Verfahrens wird ein Teil oder die Gesamtmenge des Fünfringsubstrates und/oder des Elektrophils mit der Alkalimetallkomponente im Lösemittel vorgelegt und lediglich der Wasserstoffakzeptor sowie gegebenenfalls die noch fehlende Teilmenge des Fünfringsubstrates und/oder des Elektrophils zudosiert. Dies ist jedoch nur dann möglich, wenn das Fünfringsubstrat und/oder das Elektrophil gegenüber dem Alkalimetall genügend stabil sind.

Falls dies beispielsweise bei Raumtemperatur nicht oder nur ungenügend der Fall sein sollte, kann es sich anbieten, die vorgelegte Mischung eines Alkalimetalls mit dem Elektrophil und/oder dem Fünfringsubstrat zu kühlen, beispielsweise auf 0˚C oder tiefer.

Erfindungsgemäß ist es auch möglich, eine Mischung aus Fünfringsubstrat, Elektrophil, Wasserstoffakzeptor und gegebenenfalls Lösemittel vorzulegen und unter Rühren das Alkalimetall zuzudosieren.

In diesem Fall kann die Alkalimetallkomponente in reiner Form, das heißt als trockener Feststoff oder als Schmelze zudosiert werden. Die schmelzflüssige Zugabeform bietet sich vor allem für die niedrig schmelzenden Alkalimetalle, beispielsweise Cäsium (Schmelzpunkt: 28,5˚C) oder Legierungen, beispielsweise die bereits bei Raumtemperatur (RT) in flüssiger Form vorliegende Na/K-Legierung, an.

Eine weitere erfindungsgemäße Dosiermöglichkeit besteht darin, die Alkalimetallkomponente in einem inerten Lösemittel, gegebenenfalls in Mischung mit einem Teil oder der Gesamtmenge des Fünfringsubstrates und/oder des Elektrophils vorzumischen und die vorzugsweise durch Rühren homogenisierte Suspension zur ebenfalls vorzugsweise gerührten Mischung der fehlenden Komponenten, das heißt dem Wasserstoffakzeptor und gegebenenfalls dem Elektrophil und/oder gegebenenfalls dem Fünfringsubstrat, zuzudosieren.

Das erfindungsgemäße Verfahren wird am Beispiel der Boronsäureherstellung erläutert, ohne die Erfindung

darauf einzuschränken. In vorliegendem Fall stellt das Elektrophil bevorzugt einen Borsäureester dar.

Es wurde überraschend gefunden, dass Alkalimetalle, insbesondere Lithium und Natrium, gegenüber beispielsweise Borsäureestern $B(OR)_3$ genügend stabil sind, dass keine unerwünschte direkte Reaktion stattfindet, beispielsweise gemäß:

$$3\,Li + B(OR)_3 \not\longrightarrow 3\,LiOR + B$$

Ebenso überraschend wurde gefunden, dass Borsäureester auch mit möglicherweise intermediär gebildeten Addukten aus der Alkalimetallkomponente und dem Wasserstoffakzeptor nicht reagieren. Es wurde vielmehr gefunden, dass offensichtlich erst die metallierte Zwischenstufe, hier das metallierte Fünfringsubstrat, den Borsäureester angreift und das gewünschte Produkt, also beispielsweise Furanboronsäure, mit hoher Ausbeute bildet. Wird beispielsweise Lithium als Metallierungsreagenz, Formylfurylacetal als Fünfringsubstrat und Isopren als Wasserstoffakzeptor verwendet, so kann das Reaktionsgeschehen beispielsweise wie folgt veranschaulicht werden:

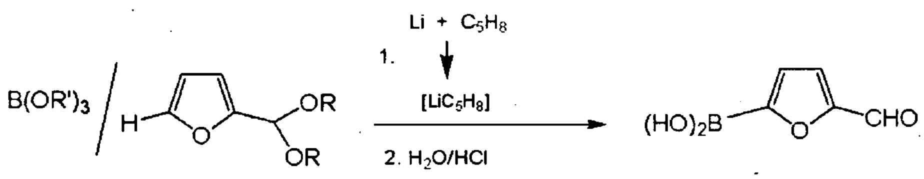


Als Fünfringsubstrat dienen erfindungsgemäß Verbindungen, die als Ringglieder neben mindestens einer aciden CH-Gruppierung maximal 4 Heteroelemente, ausgewählt aus ein oder mehreren von Sauerstoff (O), Schwefel (S), Stickstoff (N) und Selen (Se), enthalten. Die Ringkohlenstoffatome können unsubstituiert vorliegen, das heißt nur mit einem oder zwei Wasserstoffatomen verbunden sein, sie können jedoch auch mit anderen Resten G verbunden sein.

Dabei gilt hier und nachfolgend, auch in anderen Zusammenhängen, soweit nicht anders angegeben:

Mit R bezeichnete Reste (R, R', $R^1$, etc.) sind unabhängig voneinander ausgewählt aus ein oder mehreren von Wasserstoff (H), Alkyl, und/oder Aryl, bevorzugt Alkyl.

Mit G bezeichnete Reste (G, G', $G^1$, etc.) sind unabhängig voneinander ausgewählt aus ein oder mehreren von H, Alkyl, Aryl, Hal, Perfluoralkyl, Perfluoraryl. Die Alkyl- bzw. Aryl-Reste können auch eine oder mehrere heteroatomhaltige Gruppen enthalten, wobei das Heteroatom ausgewählt ist aus ein oder mehreren von O, N, P, S, Se, Si, Ge oder B. Bevorzugt handelt es sich bei den ein weiteres Heteroatom enthaltenden Gruppen um solche, die eine oder mehrere der Funktionen $-NR_2$, -OR,

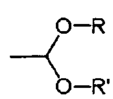,

$-SiR_3$ enthalten.

Hal steht für Halogen, bevorzugt für Fluor und/oder Chlor.

Das Fünfringsubstrat enthält mindestens eine olefinische CH-Gruppierung in $\alpha$-Stellung zu einem Heteroatom. Das C-Atom der CH-aciden Gruppe ist dabei $sp^2$-hybridisiert.

Die CH-Aciditäten des Fünfringsubstrates weisen einen $pK_a$-Wert von 20 bis 40 auf. Die nachfolgende Tabelle führt einige Daten auf. Dabei wurde Benzol als Vergleichsbeispiel gewählt:

Tabelle 1: CH-Aciditäten ausgewählter Fünfringsubstrate

| Verbindung | Ringheteroatom | $pK_a$-Werte |
|---|---|---|
| Benzol (Vergleichsbeispiel) | ./. | 43 |

(fortgesetzt)

| Verbindung | Ringheteroatom | $pK_a$-Werte |
|---|---|---|
| 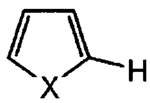 | X = S<br>X = O<br>X = N-R | 38,4 |
| 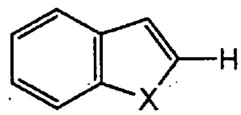 | X = S<br>X = O | 37,1<br>36,8 |
| 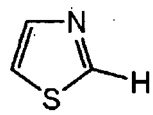 | | 29,5 |
| 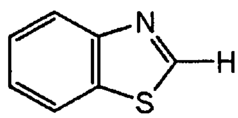 | | 28,1 |

Besonders bevorzugt eignen sich folgende CH-acide Fünfringheterocyclen:

Fünfringheterocyclen mit einem Heteroatom wie beispielsweise:

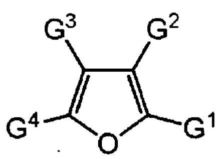

Furan

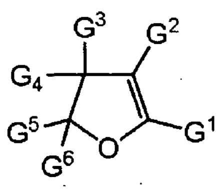

2,3-Dihydrofuran

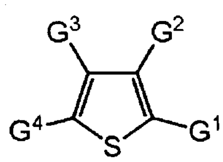

Thiophen

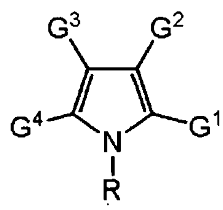

Pyrrol

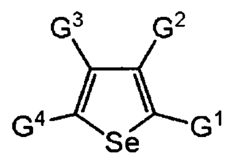

Selenophen

Fünfringheterocyclen mit zwei Heteroatomen wie beispielsweise:

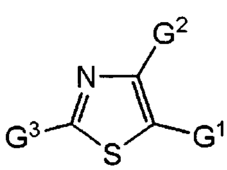

Thiazol

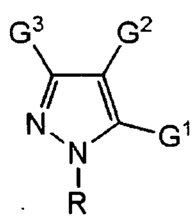

Pyrazol

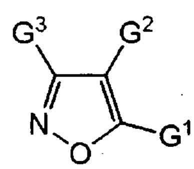

Isoxazol

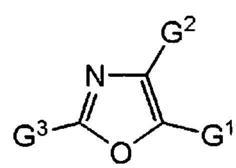

Oxazol

Fünfringheterocyclen mit drei Heteroatomen wie beispielsweise:

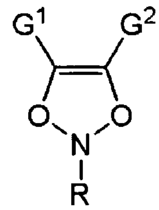
1,3,2-Dioxazol

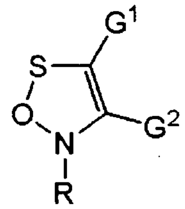
1,2,5-Oxathiazol

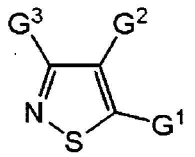
1,2-Isothiazol

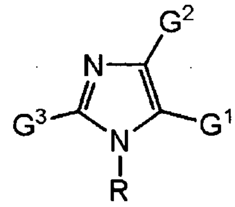
Imidazol

oder Fünfringheterocyclen mit vier Heteroatomen wie beispielsweise:

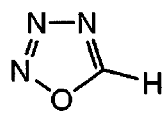
1,2,3,4-Oxatriazol

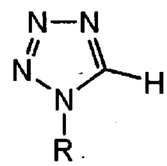
Tetrazol

wobei mindestens eine der Gruppen $G^1$ bis $G^6$ Wasserstoff ist und dieser Wasserstoff mit einem $sp^2$-hybrisierten C-Atom verbunden ist.

Als geeignete Wasserstoffakzeptoren dienen erfindungsgemäß offenkettige oder zyklische, nicht substituierte oder mit Alkyl oder Vinyl substituierte 1,3-Diene, oder substituierte oder nicht substituierte 1-Arylolefine, bevorzugt Verbindungen mit nachfolgend aufgeführten allgemeinen Strukturen:

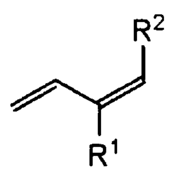

mit $R^1$, $R^2$ = H, Alkyl, Vinyl ($R^1$, $R^2$ in cis- oder trans-Stellung),

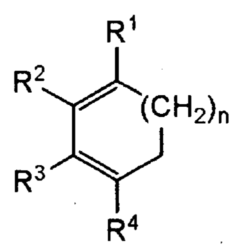

mit n = 1 bis 5 und $R^1$, $R^2$, $R^3$, $R^4$ = unabhängig voneinander H oder Alkyl,

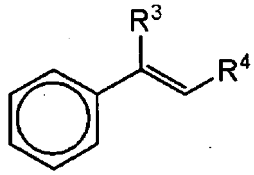

mit $R^3$, $R^4$ = H, Alkyl ($R^3$, $R^4$ in cis- oder trans-Stellung).

Besonders bevorzugt sind Butadien, Isopren Cyclohexadien-1,3, Styrol, Methylstyrol oder 1,1-Diphenylethen.

Es wurde gefunden, dass substituierte oder nicht substituierte 1-Arylolefine, wie Styrol, Methylstyrol oder 1,1-Diphenylethen nicht in allen Fällen zufrieden stellende Ergebnisse liefern. Die Verwendung von 1-Arylolefinen als Wasserstoffakzeptoren ist auf die Metallierung der relativ sauren Fünfringheterocyclen, beispielsweise Thiazol oder anderer mehrfach heterosubstituierter Fünfringe, beschränkt. Werden 1-Arylolefine zur Metallierung von weniger aciden Verbindungen eingesetzt, beispielsweise Thiophen oder Indol, sind die Ausbeuten deutlich schlechter als bei der Verwendung von 1,3-Dienen.

Sofern die verwendete Alkalimetallkomponente nicht schmelzflüssig vorliegt, liegt sie erfindungsgemäß bevorzugt in feinverteilter Form vor, das heißt als Pulver mit Partikelgrößen, die kleiner als ca. 0,2 mm sind. Erfindungsgemäß lassen sich jedoch auch gröbere Abformungen, beispielsweise granuliertes Material mit Kantenlängen von wenigen mm einsetzen. Da die Reaktionsgeschwindigkeit von der Größe der zur Verfügung stehenden Metalloberfläche abhängig ist, ist beim Einsatz grobstückigen Materials in der Regel mit längeren Reaktionszeiten und/oder schlechteren Reaktionsausbeuten zu rechnen. In diesem Fall sollte die Alkalimetallkomponente im deutlichen Überschuss, das heißt mindestens mit 20 % bis 200 %, bevorzugt mit mindestens 50% bis 200% Überschuss, bezogen auf die Stoffmenge des Fünfringsubstrates, eingesetzt werden.

Das verwendete alkalimetallhaltige Metallierungsreagenz sollte eine möglichst reine metallische Oberfläche aufweisen, das heißt eine möglichst wenig ausgeprägte Schicht an Korrosionsprodukten. Korrosionsprodukte wie beispielsweise Alkalimetalloxide, -carbonate, -hydroxide oder -nitride hemmen den Ablauf der gewünschten Reaktion, da sie den Kontakt zwischen Alkalimetall in der Oxidationsstufe 0 mit den Reaktanden Wasserstoffakzeptor, Fünfringsubstrat und Elektrophil verhindern. Daher ist es erfindungsgemäß bevorzugt, das Metall nach einem Verfahren nach Stand der Technik zu aktivieren und/oder es erst unmittelbar vor der Verwendung in eine für die Metallierungsreaktion geeignete physikalische Form zu bringen.

Zur Metallaktivierung können beispielsweise Metallphasentransferkatalysatoren, im folgenden Phasentransferkatalysatoren (PTC) genannt, beispielsweise Naphthalin, Anthracen, Diphenyl oder Di-tert-butyldiphenyl eingesetzt werden. Die genannten polycyclischen Aromaten vermögen in wasserfreien polar-aprotischen Lösemitteln Alkalimetalle unter Bildung von Radikalanionenkomplexen zu addieren. Dadurch wird die Oxidschicht auf dem Metall aufgebrochen und das Alkalimetall in eine hochreaktive lösliche Form überführt. Die genannten Katalysatoren vermindern auf diese Weise die unerwünschte Induktionsphase; außerdem führt ihre Anwesenheit im Reaktionsgemisch dazu, dass zum Erlangen einer bestimmten Produktausbeute weniger Wasserstoffakzeptor benötigt wird. Der PTC wird erfindungsgemäß in Konzentrationen von 0,0001 bis 5 Mol%, bevorzugt 0,001 bis 2 mol%, besonders bevorzugt 0,01 bis 0,5 mol% bezogen auf die eingesetzte Alkalimetallkomponente, zugegeben.

Erfindungsgemäß kann eine hochaktive Alkalimetallkomponente auch dadurch erzeugt werden, dass grobstückige Abformungen im verwendeten wasserfreien Lösemittel oder Lösemittelgemisch unter Inertgas, beispielsweise Argon oder Stickstoff, aufgeschmolzen und mittels eines hochtourigen Rührers in fein verteilter Form dispergiert werden. Vor Durchführung des erfindungsgemäßen Verfahrens wird der Ansatz bevorzugt auf die gewünschte Temperatur abgekühlt, woraufhin die Alkalimetallkomponente bei Unterschreiten des Schmelzpunktes zu einem hochreaktiven Pulver erstarrt. Dieses Vorgehen ist insbesondere für Natrium (Schmelzpunkt: 98°C) und Kalium (Schmelzpunkt: 64°C) geeignet.

Als elektrophile Verbindungen können prinzipiell alle dem Fachmann geläufigen Verbindungen, die mit cärbanionischen Stoffen reagieren, insbesondere Kohlenstoff-, Bor- und Siliciumelektrophile eingesetzt werden. Als Borelektrophile dienen bevorzugt Borsäureester der allgemeinen Formel $B(OR)_3$, oder Borhalogenide der allgemeinen Formel $BHal_3$, besonders bevorzugt Trimethylborat, Triethylborat, Triisopropylborat und Tributylborat.

Als Siliciumelektrophile dienen Verbindungen der allgemeinen Formel $SiA_4$, wobei die Substituenten A unabhängig voneinander für gleiche oder verschiedene $C_1$- bis $C_6$-Alkoxy, Fluor, Chlor, Brom, Iod, $C_1$- bis $C_8$-Alkyl oder $C_6$- bis $C_{20}$-Aryl stehen, aber mindestens einer der Substituenten A ausgewählt ist aus der Gruppe $C_1$- bis $C_6$-Alkoxy, Fluor, Chlor, Brom oder Iod. Besonders bevorzugt sind Di- und Trialkylsiliciumhalogenide. Ganz besonders bevorzugt sind Trimethylchlorsilan und/oder Dimethyldichlorsilan.

Als Kohlenstoffelektrophile können erfindungsgemäß dienen:

| | |
|---|---|
| Epoxide: | $C_2H_4O$ oder substituierte Derivate |
| Alkylhalogenide: | R-Hal |
| Arylhalogenide: | Ar-Hal |
| Carbonylverbindungen: | Aldehyde, Ketone, gesättigt oder ungesättigt) |
| Ketene: | 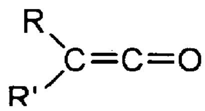 |
| Nitrile: | Arylnitrile, Hetarylnitrile, oder Alkylnitrile |
| Amide: | R-CONR'$_2$ |
| Carbonsäuren: | RCOOH, sowie deren Alkalisalze |
| Carbonsäureester: | RCOOR' |

Bei dem erfindungsgemäßen Verfahren werden pro Mol des eingesetzten Fünfringsubstrates jeweils mindestens 0,25 Mol und maximal 10 Mol der Alkalimetallkomponente sowie des Wasserstoffakzeptors und des Elektrophils eingesetzt. Im Allgemeinen ist es am sinnvollsten, von den Verhältnissen der theoretischen Stöchiometrie, das heißt:

| | |
|---|---|
| Fünfringsubstrat: | 1 Moläquivalent |
| Alkalimetallkomponente: | 1 Moläquivalent |
| Wasserstoffakzeptor: | zwischen 0,5 und ca. 1 Moläquivalenten |
| Elektrophil: | 1 Moläquivalent |

nicht allzu stark abzuweichen. Es kann jedoch in Spezialfällen Sinn machen, beispielsweise den Fünfringheterocyclus im Überschuss einzusetzen: nämlich dann, wenn es billig ist und die anderen Komponenten mit möglichst hohen Ausbeuten genutzt werden sollen.

Die im Einzelfall sinnvolle Stöchiometrie des Wasserstoffakzeptors ist vor allem von der CH-Acidität des Fünfringsubstrates abhängig. Bei sehr sauren Verbindungen ($pK_a$ < ca. 30) reicht in der Regel ein halbes Moläquivalent für eine vollständige Umsetzung aus. Dagegen muss für relativ wenig saure Fünfringsubstrate ($pK_a$ > ca. 35, beispielsweise Furan, Thiophen und dergleichen) ca. ein Moläquivalent, in Einzelfällen auch mehr, aufgewendet werden. Es ist im allgemeinen bevorzugt, pro Mol des Fünfringsubstrates mindestens 0,5 und maximal 2 Mol der Alkalimetallkomponente sowie des Wasserstoffakzeptors und des Elektrophils einzusetzen.

Als Lösemittel werden erfindungsgemäß aprotische organische Verbindungen wie Ether, Kohlenwasserstoffe, tertiäre Amine oder Mischungen aus diesen eingesetzt.

Als Ether werden bevorzugt offenkettige oder zyklische Monoether, beispielsweise Tetrahydrofuran (THF), 2-Methyltetrahydrofuran (MTHF), Tetrahydropyran (THP), Diethylether, Dibutylether, Methyl-tert-butylether (MTBE) oder Polyether, beispielsweise 1,2-Dimethoxyethan (1,2-DME) oder Diethylenglykoldimethylether, eingesetzt, entweder in reiner Form oder im Gemisch untereinander oder im Gemisch mit Ethern und/oder Kohlenwasserstoffen.

Als Kohlenwasserstoffe werden beispielsweise Pentan, Hexan, Cyclohexan, Heptan, Octan, Methylcyclohexan, Toluol, Ethylbenzol oder Cumol eingesetzt, entweder in reiner Form oder im Gemisch untereinander oder im Gemisch mit Ethern und/oder tertiären Aminen eingesetzt..

Als tertiäre Amine werden beispielsweise Triethylamin, Tributylamin, Tetramethylethylendiamin (TMEDA), Pyridin oder ähnliche entweder in reiner Form oder im Gemisch untereinander oder im Gemisch mit Ethern und/oder Kohlenwasserstoffen eingesetzt.

Da Kohlenwasserstoffe im Allgemeinen deutlich preisgünstiger sind als etherische Lösemittel, bedeutet ein hoher Kohlenwasserstoffanteil im Lösemittel eine verbesserte Wirtschaftlichkeit des erfindungsgemäßen Verfahrens.

Es ist bekannt, dass die Reaktivität metallorganischer Verbindungen durch Zusatz starker Donorlösemittel (Lewis-Basen), beispielsweise Aminen oder Ethern, beträchtlich gesteigert werden kann. Deshalb ist die Anwesenheit starker Donorlösemittel insbesondere für die Metallierung wenig reaktiver, das heißt wenig saurer Fünfringsubstrate nach erfindungsgemäßem Verfahren bevorzugt.

Bei der erfindungsgemäßen Umsetzung wird mindestens ein Wasserstoffatom des Fünfringsubstrates gegen ein Alkalimetallatom ausgetauscht. Der dabei freiwerdende Wasserstoff wird vom Wasserstoffakzeptor aufgenommen. Dabei bilden sich das einfach hydrierte Monomere und/oder das Hydrodimerisierungsprodukt sowie in untergeordnetem Maße höhere Oligomere des Hydrierungsproduktes. Bei der Verwendung von Isopren bildet sich beispielsweise Isopenten sowie ein Gemisch aus Dimethyloktadienen und weiterhin sehr kleine Mengen ungesättigter $C_{15}$-Kohlenwasser-

stoffe.

Unter erfindungsgemäßer Reaktionsführung reagiert das in situ gebildete Alkalimetallsalz des Fünfringsubstrates, das heißt, die metallierte Zwischenstufe, gleich mit dem ebenfalls anwesenden Elektrophil ab. Dadurch liegt das Alkalimetallsalz des Fünfringsubstrates je nach genauer Reaktionsführung nur in geringer oder sogar unmessbar kleiner Konzentration vor. Auf diese Weise wird es vermieden, dass die zum Teil sehr reaktionsfähige metallierte Zwischenstufe in unerwünschter Weise mit Komponenten des Reaktionssystems, beispielsweise dem Lösemittel, reagiert.

Der genaue Reaktionsablauf ist von spezifischen Reaktionsparametern, beispielsweise der Reaktivität der metallierten Zwischenstufe, das heißt des metallierten Fünfringheterocyclus, der Nucleophilie des Elektrophils, der Reaktionstemperatur und der Reaktionsführung, das heißt von der Dosierweise des Elektrophils abhängig. Falls das Elektrophil in stöchiometrischer Menge oder im Überschuss vorliegt, ist davon auszugehen, dass die jeweilige metallierte Zwischenstufe zu jedem Zeitpunkt in unmessbar kleiner Konzentration vorliegt, weil er sofort mit dem Elektrophil abreagiert. Damit herrschen so genannte ISQ-Bedingungen. Es ist jedoch auch möglich, zunächst die Metallierungsreaktion im Unterschuss des Elektrophils durchzuführen und die fehlende Menge an Elektrophil erst verzögert oder nach Beendigung der Metallierungsreaktion zuzugeben. In diesem Fall kann es nötig sein, bei deutlich niedrigeren Temperaturen zu arbeiten, als es unter vollständigen ISQ-Bedingungen der Fall wäre.

Im Sinne des erfindungsgemäßen Verfahrens beträgt die Konzentration des Elektrophils im Reaktionsgemisch zu jeder Zeit 10 % bis 500 %, bevorzugt 80 % bis 400 %, besonders bevorzugt 100 % bis 200 % der Konzentration an bis zur selben Zeit eindosiertem Fünfringheterocyclus.

Die Reaktionstemperaturen liegen erfindungsgemäß zwischen -80 und 100˚C, bevorzugt jedoch im Bereich zwischen -20 und 50˚C. Die Eindosierungszeiten liegen je nach Temperatur und Rohstoffkombination erfindungsgemäß zwischen 20 Minuten und 20 Stunden, bevorzugt zwischen einer und 10 Stunden. Nach Beendigung der Dosierung schließt sich eine Nachreaktionsphase an, die erfindungsgemäß zwischen 15 Minuten und 2 Stunden in Anspruch nimmt.

Nach Reaktionsende wird die Reaktionsmischung in üblicher Weise aufgearbeitet. Häufig werden mit Wasser oder einer anderen protischen Verbindung, beispielsweise mit Alkoholen, Säuren etc., eventuell vorhandene Alkalimetallreste zersetzt und die gewünschte organische Verbindung freigesetzt. Die Produktisolierung erfolgt beispielsweise durch Filtration oder Destillation. Häufig geht diesen Tätigkeiten eine Reihe von Extraktions- und/oder Phasentrennungsoperationen nach Stand der Technik voraus.

Die auf diese Art und Weise isolierten funktionalisierten Fünfringheterocyclen finden vielfältige Verwendung in der organischen Chemie, insbesondere für die Herstellung von Pharma- und Pflanzenschutzpräparaten.

Gegenstand der Erfindung ist im Einzelnen:

- ein Verfahren zur Herstellung funktionalisierter Fünfringheterocyclen durch Umsetzung eines Fünfringsubstrat mit einem Elektrophil, einem Wasserstoffakzeptor und einer Alkalimetallkomponente, bevorzugt in einem organischen Lösemittel, wobei die Bildung der metallierten Zwischenstufe in Gegenwart eines Fünfringsubstrates und eines Elektrophils erfolgt;

- ein Verfahren zur Herstellung funktionalisierter Fünfringheterocyclen durch Umsetzung eines Fünfringsubstrates mit einem Elektrophil, einem Wasserstoffakzeptor und einer Alkalimetallkomponente, wobei die Alkalikomponente in einem organischen Lösemittel vorgelegt wird und das Fünfringsubstrat, das Elektrophil und der Wasserstoffakzeptor in beliebiger Reihenfolge oder gleichzeitig sowie getrennt oder in beliebigen Mischungen zugegeben werden;

- ein Verfahren zur Herstellung funktionalisierter Fünfringheterocyclen durch Umsetzung eines Fünfringsubstrates mit einem Elektrophil, einem Wasserstoffakzeptor und einer Alkalimetallkomponente, wobei das Fünfringsubstrat, das Elektrophil und der Wasserstoffakzeptor in beliebiger Reihenfolge oder gleichzeitig sowie getrennt oder in beliebigen Mischungen vorgelegt werden und die Alkalimetallkomponente, bevorzugt in einem organischen Lösemittel suspendiert, zugegeben wird;

- ein Verfahren zur Herstellung funktionalisierter Fünfringheterocyclen, wobei ein Fünfringsubstrat, ein Elektrophil und ein Wasserstoffakzeptor entweder im Gemisch oder getrennt, aber gleichzeitig zu einer Suspension einer Alkalimetallkomponente in einem organischen Lösemittel dosiert werden;

- ein Verfahren zur Herstellung funktionalisierter Fünfringheterocyclen, wobei der Wasserstoffakzeptor und das Elektrophil entweder im Gemisch oder getrennt, aber gleichzeitig zur Suspension der Alkalimetallkomponente in einem Gemisch aus einem organischen Lösemittel und dem Fünfringsubstrat dosiert werden;

- ein Verfahren zur Herstellung funktionalisierter Fünfringheterocyclen, wobei das Fünfringsubstrat und der Wasserstoffakzeptor entweder im Gemisch oder getrennt, aber gleichzeitig zur Suspension der Alkalimetallkomponente in einem Gemisch aus einem organischen Lösemittel und dem Elektrophil dosiert werden;

- ein Verfahren zur Herstellung funktionalisierter Fünfringheterocyclen, wobei der Wasserstoffakzeptor zur Suspension der Alkalimetallkomponente in einem Gemisch aus einem organischen Lösemittel, dem Elektrophil sowie dem Fünfringsubstrat dosiert wird;

- ein Verfahren zur Herstellung funktionalisierter Fünfringheterocyclen, wobei die Suspension der Alkalimetallkomponente in einem organischen Lösemittel zu einer Mischung aus dem Wasserstoffakzeptor, dem Elektrophil und dem Fünfringsuspension und gegebenenfalls einem organischen Lösemittel dosiert wird;

- ein Verfahren zur Herstellung funktionalisierter Fünfringheterocyclen, wobei die Suspension der Alkalimetallkomponente in einem organischen Lösemittel sowie dem Elektrophil und/oder dem Fünfringsubstrat zu einer Mischung aus dem Wasserstoffakzeptor und/oder dem Elektrophil und/oder dem Fünfringsubstrat dosiert wird;

- ein Verfahren zur Herstellung funktionalisierter Fünfringheterocyclen, wobei es sich bei dem Fünfringsubstrat um einen CH-aciden Fünfringheterocyclus handelt;

- ein Verfahren zur Herstellung funktionalisierter Fünfringheterocyclen, wobei das Fünfringsubstrat in $\alpha$-Stellung zu mindestens einem Ringheteroatom mindestens eine CH-acide Gruppe aufweist, deren C-Atom $sp^2$-hybridisiert ist;

- ein Verfahren zur Herstellung funktionalisierter Fünfringheterocyclen, wobei das Fünfringsubstrat ausgewählt ist aus Furan, 2,3-Dihydrofuran, Thiopen oder Pyrrol und diese Verbindung bis auf eine in $\alpha$-Stellung zum Ringheteroatom befindliche CH-acide Gruppe beliebig substituiert sein kann;

- ein Verfahren zur Herstellung funktionalisierter Fünfringheterocyclen, wobei mindestens eine CH-acide Bindung des Fünfringsubstrates einen $pK_a$-Wert von 20 bis 40 aufweist;

- ein Verfahren zur Herstellung funktionalisierter Fünfringheterocyclen, wobei der Wasserstoffakzeptor ausgewählt ist aus einem oder mehreren von offenkettigen oder zyklischen, nicht substituierten oder mit Alkyl oder Vinyl substituierten 1,3-Dienen oder substituierten oder nicht substituierten 1-Arylolefinen;

- ein Verfahren zur Herstellung funktionalisierter Fünfringheterocyclen, wobei der Wasserstoffakzeptor ausgewählt ist aus einem oder mehreren von Butadien, Isopren, Cyclohexadien-1,3, Styrol, Methylstyrol oder 1,1-Diphenylethen;

- ein Verfahren zur Herstellung funktionalisierter Fünfringheterocyclen, wobei die Alkalimetallkomponente ausgewählt ist aus ein oder mehreren von Lithium, Natrium, Kalium;

- ein Verfahren zur Herstellung funktionalisierter Fünfringheterocyclen, wobei die Alkalimetallkomponente als Pulver oder als Granulat eingesetzt wird;

- ein Verfahren zur Herstellung funktionalisierter Fünfringheterocyclen, wobei die Alkalimetallkomponente unmittelbar vor der Verwendung im verwendeten Lösemittel dispergiert wird;

- ein Verfahren zur Herstellung funktionalisierter Fünfringheterocyclen, wobei als Elektrophil eine Verbindungen eingesetzt wird, die mit carbanionischen Stoffen reagiert;

- ein Verfahren zur Herstellung funktionalisierter Fünfringheterocyclen, wobei als Elektrophil ein Kohlenstoff-, Bor- und/oder Siliciumelektrophil eingesetzt wird;

- ein Verfahren zur Herstellung funktionalisierter Fünfringheterocyclen, wobei als Borelektrophil ein Borsäureester der allgemeinen Formel $B(OR)_3$, oder Borhalogenide der allgemeinen Formel $BHal_3$, bevorzugt Trimethylborat, Triethylborat, Triisopropylborat und Tributylborat, eingesetzt wird;

- ein Verfahren zur Herstellung funktionalisierter Fünfringheterocyclen, wobei als Siliciumelektrophil eine Verbindungen der allgemeinen Formel $SiA_4$, bevorzugt Di- und Trialkylsiliciumhalogenide, besonders bevorzugt Trimethylchlorsilan und/oder Dimethyldichlorsilan, eingesetzt wird;

- ein Verfahren zur Herstellung funktionalisierter Fünfringheterocyclen, wobei das Kohlenstoffelektrophil ausgewählt ist aus ein oder mehreren von Epoxiden, Alkylhalogeniden, Arylhalogeniden, Carbonylverbindungen, Ketenen, Nitrilen, Amiden, und/oder Carbonsäuren, deren Alkalisalzen und/oder Estern;

- ein Verfahren zur Herstellung funktionalisierter Fünfringheterocyclen, wobei die Elektrophilkonzentration im Reaktionsgemisch zu jeder Zeit 10% bis 500 %, bevorzugt 80% bis 400%, besonders bevorzugt 100% bis 200% der Konzentration an bis zur selben Zeit eindosiertem Fünfringheterocyclus beträgt.

- ein Verfahren zur Herstellung funktionalisierter Fünfringheterocyclen, wobei als Lösemittel eine aprotische organische Verbindung, bevorzugt ausgewählt aus Kohlenwasserstoffen, Ethern oder tertiäre Aminen, entweder in reiner Form oder im Gemisch, eingesetzt wird;

- ein Verfahren zur Herstellung funktionalisierter Fünfringheterocyclen, wobei als Lösemittel ein offenkettiger oder zyklischer Monoether oder ein Polyether, bevorzugt THF, MTHF, THP, Diethylether, Dibutylether, MTBE, 1,2-DME und/oder Diethylenglykoldimethylether, entweder in reiner Form oder im Gemisch untereinander oder im Gemisch mit Kohlenwasserstoffen, eingesetzt wird;

- ein Verfahren zur Herstellung funktionalisierter Fünfringheterocyclen, wobei als Lösemittel ein tertiäres Amin, bevorzugt Triethylamin, Tributylamin, Tetramethylethylendiamin (TMEDA), Pyridin, entweder in reiner Form oder im Gemisch untereinander oder im Gemisch mit Ethern und/oder Kohlenwasserstoffen, eingesetzt wird;

- ein Verfahren zur Herstellung funktionalisierter Fünfringheterocyclen, wobei als Lösemittel ein Kohlenwasserstoff, bevorzugt eine aliphatische oder aromatische Verbindung, besonders bevorzugt Pentan, Hexan, Cyclohexan, Heptan, Octan, Methylcyclohexan, Toluol, Ethylbenzol oder Cumol, entweder in reiner Form oder im Gemisch untereinander oder im Gemisch mit Ethern und/oder tertiären Aminen, eingesetzt wird;

- ein Verfahren zur Herstellung funktionalisierter Fünfringheterocyclen, wobei der Reaktionsmischung ein Phasentransferkatalysator (PTC) zugegeben wird;

- ein Verfahren zur Herstellung funktionalisierter Fünfringheterocyclen, wobei der PTC in Konzentrationen von 0,0001 bis 5 mol%, bevorzugt 0,001 bis 2 mol%, besonders bevorzugt 0,01 bis 0,5 mol%, bezogen auf eingesetzte Alkalimetallkomponente, eingesetzt wird;

- ein Verfahren zur Herstellung funktionalisierter Fünfringheterocyclen, wobei je Mol des Fünfringsubstrates zwischen 0,25 und 10 Mol, bevorzugt zwischen 0,5 und 2 Mol der Alkalimetallkomponente, des Wasserstoffakzeptors und des Elektrophils eingesetzt werden;

- ein Verfahren zur Herstellung funktionalisierter Fünfringheterocyclen, wobei die Reaktionstemperaturen zwischen -80 und 100˚C, bevorzugt zwischen -20 und 50˚C, besonders bevorzugt zwischen 0 und 40˚C liegen;

- ein Verfahren zur Herstellung funktionalisierter Fünfringheterocyclen, wobei die Eindosierungszeiten zwischen 20 Minuten und 20 Stunden, bevorzugt zwischen einer und 10 Stunden liegen;

- ein Verfahren zur Herstellung funktionalisierter Fünfringheterocyclen, wobei die Nachreaktionsphase zwischen 15 Minuten und 2 Stunden dauert;

- ein Verfahren zur Herstellung funktionalisierter Fünfringheterocyclen, wobei die Reaktionsmischung nach vollständiger Umsetzung wässrig/sauer hydrolysiert wird und die funktionalisierte Fünfringheterocyclusverbindung durch eine oder mehrere der Operationen Filtration, Extraktion oder Destillation isoliert wird;

Die Erfindung wird anhand folgender Beispiele erläutert, ohne die Erfindung darauf einzuschränken:

Beispiel 1: Herstellung von 2-Formylfuranboronsäure aus 2-Furaldehyd-ethylenacetal, Trimethylborat und Lithiumpulver in THF

In einem ausgeheizten und mit Argon gefüllten 250-ml-Schlenkkolben werden 0,55 g (79 mmol) Lithiumpulver (Korngröße < 100μm) in 120g THF vorgelegt und magnetisch 15 Minuten bei RT gerührt. Dann wird mittels Spritzendosierer eine Mischung aus 8,2 g (79 mmol) Trimethylborat, 5,1 g (75 mmol) Isopren und 10,5 g (75 mmol) 2-Furaldehydethylenacetal innerhalb von 200 Minuten zugetropft. Die Innentemperatur wird dabei mittels Wasserbad im Bereich zwischen 25 und 30 ˚C gehalten.
Nach Beendigung des Zutropfens wird noch 35 Minuten bei ca. 25˚C gerührt. Dann werden 50 ml Wasser und 70 g 20%ige Salzsäure zugegeben. Es bilden sich zwei flüssige Phasen, die im Scheidetrichter getrennt werden. Die

wässrige Phase wird dreimal mit je ca. 200 ml Diethylether extrahiert. Die vereinigten organischen Phasen werden zweimal mit 50 ml Wasser ausgeschüttelt, mit Natriumsulfat getrocknet und filtriert. Das Filtrat wird am Rotationsverdampfer aufkonzentriert. Er werden 167 g Konzentrat erhalten.

Im Konzentrat wird durch HPLC ein Gehalt an 2-Formylfuranboronsäure von 6,1 Gew.% festgestellt. Dies entspricht einer Ausbeute von 73 mmol oder 97 % d.Th.

Nach Totaleindampfung und Rekristallisation des festen Rückstandes aus Acetonitril/Wasser (2 : 1) werden 9,2 g (66 mmol) reine 2-Formylfuranboronsäure erhalten.

Beispiel 2: Herstellung von 2-Formylfuranboronsäure aus 2-Furaldehyd-diethylacetal, Trimethylborat und Lithiumgranulat in THF

In einem ausgeheizten und mit Argon gefüllten 250-ml-Schlenkkolben werden 0,87 g (125 mmol) Lithiummetallgranulat (Teilchen mit 2 bis 3 mm Kantenlänge) in 120 g THF vorgelegt. Es werden 12 mg Biphenyl zugegeben und der Ansatz wird dann ca. 30 min bei RT gerührt. Nach dieser Zeit bildet sich der Radikalanionenkomplex aus Lithium und Biphenyl, der der Suspension eine grünlich-braune Färbung verleiht.

Dann wird eine Mischung aus 8,2 g Trimethylborat, 5,1 g Isopren und 12,8 g 2-Furaldehyddiethylacetal innerhalb von 3 Stunden bei Innentemperaturen zwischen 22 und 25˚C zugetropft. Nach wässrig-saurer Hydrolyse und Aufarbeitung wie in Beispiel 1 werden 190 g einer etherischen Lösung erhalten, die 5,1 % 2-Formylfuranboronsäure enthält. Dies entspricht einer Ausbeute von 92 % d.Th.

Beispiel 3: Herstellung von 2-Formylfuranboronsäure aus 2-Furaldehyd-ethylenacetal, Triisopropylborat und Lithiumpulver in THF

In einem inertisierten 250-ml-Schlenkkolben werden 0,55 g Lithiumpulver und 12 mg Biphenyl in 8,5 g THF suspendiert und bei RT gerührt. Nach erfolgtem Farbumschlag nach grünlich-bräunlich werden zunächst 20 g Toluol zugegeben und dann mit der Dosierung einer Mischung aus 8,2 g Trimethylborat, 5,3 g Isopren und 12,8 g 2-Furaldehyddiethylacetal begonnen. Nach Dosierbeginn steigt die Innentemperatur innerhalb von 10 Minuten von 23 auf ca. 26˚C. Dann werden weitere 55 g Toluol zugegeben und die Dosierung des Dreistoffgemisches fortgesetzt. Die Mischung wird innerhalb von 90 Minuten zugetropft.

Nach Beendigung der Reaktion wird sauer hydrolysiert und wie in Beispiel 1 aufgearbeitet. Es werden 260 g einer gelblichen Lösung erhalten, die 3,3 Gew.% 2-Formylfuranboronsäure enthält. Dies entspricht einer Ausbeute von 81 % d.Th.

Beispiel 4: Herstellung von 2-Formylfuranboronsäure aus 2-Furaldehyd-ethylenacetal, Triisopropylborat und Natriumpulver in THF

In einem inertisierten 250-ml-Schlenkkolben werden 1,81 g Natriumpulver (Korngröße < 100 $\mu$m), 12 mg Biphenyl und 120 g THF vorgelegt. Nach 15 Minuten Rühren bei RT wird eine Mischung aus 14,8 g Triisopropylborat, 5,1 g Isopren und 10,5 g 2-Furaldehydethylenacetal bei Innentemperaturen zwischen 5 und 10˚C unter Wasserkühlung innerhalb von 2 Stunden zugetropft.

Nach vollständiger Dosierung wird noch eine Stunde bei ca. 25˚C gerührt und die Mischung dann in ca. 150 g einer gerührten und mittels Eis auf ca. 0˚C abgekühlten 15%eigen Salzsäure gegossen.

Nach Aufarbeitung wie oben beschrieben, werden 260 g einer gelb-bräunlichen Lösung erhalten, die nach HPLC-Analytik 9,8 g 2-Formylboronsäure enthält. Dies entspricht einer Ausbeute von 93 % d.Th.

**Patentansprüche**

1. Verfahren zur Herstellung funktionalisierter Fünfringheterocyclen durch Umsetzung eines Fünfringsubstrates mit einem Elektrophil, einem Wasserstoffakzeptor und einer Alkalimetallkomponente, **dadurch gekennzeichnet, dass** zu jedem Zeitpunkt, an dem der Wasserstoffakzeptor mit der Alkalimetallkomponente gemeinsam im Ansatz vorliegt, auch das Fünfringsubstrat und das Elektrophil ebenfalls in mindestens stöchiometrischen Mengen, bezogen auf den Wasserstoffakzeptor, im Ansatz vorliegen, wobei die Alkalimetallkomponente aus einem Alkalimetall oder einem Gemisch aus Alkalimetallen besteht.

2. Verfahren nach Anspruch 1, **dadurch gekennzeichnet, dass** die Alkalikomponente in einem organischen Lösemittel vorgelegt wird und das Fünfringsubstrat, das Elektrophil und der Wasserstoffakzeptor in beliebiger Reihenfolge oder gleichzeitig sowie getrennt oder in beliebigen Mischungen zugegeben werden.

3. Verfahren nach Anspruch 1, **dadurch gekennzeichnet, dass** das Fünfringsubstrat, das Elektrophil und der Wasserstoffakzeptor in beliebiger Reihenfolge oder gleichzeitig sowie getrennt oder in beliebigen Mischungen vorgelegt werden und die die Alkalimetallkomponente, bevorzugt in einem organischen Lösemittel suspendiert, zugegeben wird.

4. Verfahren nach Anspruch 1, **dadurch gekennzeichnet, dass** ein Fünfringsubstrat, ein Elektrophil und ein Wasserstoffakzeptor entweder im Gemisch oder getrennt, aber gleichzeitig zu einer Suspension einer Alkalimetallkomponente in einem organischen Lösemittel dosiert werden.

5. Verfahren nach Anspruch 1, **dadurch gekennzeichnet, dass** der Wasserstoffakzeptor und das Elektrophil entweder im Gemisch oder getrennt, aber gleichzeitig zur Suspension der Alkalimetallkomponente in einem Gemisch aus einem organischen Lösemittel und dem Fünfringsubstrat dosiert werden.

6. Verfahren nach Anspruch 1, **dadurch gekennzeichnet, dass** das Fünfringsubstrat und der Wasserstoffakzeptor entweder im Gemisch oder getrennt, aber gleichzeitig zur Suspension der Alkalimetallkomponente in einem Gemisch aus einem organischen Lösemittel und dem Elektrophil dosiert werden.

7. Verfahren nach Anspruch 1, **dadurch gekennzeichnet, dass** der Wasserstoffakzeptor zur Suspension der Alkalimetallkomponente in einem Gemisch aus einem organischen Lösemittel, dem Elektrophil sowie dem Fünfringsubstrat dosiert wird.

8. Verfahren nach Anspruch 1, **dadurch gekennzeichnet, dass** die Suspension der Alkalimetallkomponente in einem organischen Lösemittel zu einer Mischung aus dem Wasserstoffakzeptor, dem Elektrophil und dem Fünfringsuspension und gegebenenfalls einem organischen Lösemittel dosiert wird.

9. Verfahren nach Anspruch 1, **dadurch gekennzeichnet, dass** die Suspension der Alkalimetallkomponente in einem organischen Lösemittel sowie dem Elektrophil und/oder dem Fünfringsubstrat zu einer Mischung aus dem Wasserstoffakzeptor und/oder dem Elektrophil und/oder dem Fünfringsubstrat dosiert wird.

10. Verfahren nach einem oder mehreren der Ansprüche 1 bis 9, **dadurch gekennzeichnet, dass** es sich bei dem Fünfringsubstrat um einen CH-aciden Fünfringheterocyclus handelt.

11. Verfahren nach einem oder mehreren der Ansprüche 1 bis 10, **dadurch gekennzeichnet, dass** das Fünfringsubstrat in $\alpha$-Stellung zu mindestens einem Ringheteroatom mindestens eine CH-acide Gruppe aufweist, deren C-Atom $sp^2$-hybridisiert ist.

12. Verfahren nach einem oder mehreren der Ansprüche 1 bis 11, **dadurch gekennzeichnet, dass** das Fünfringsubstrat ausgewählt ist aus Furan, 2,3-Dihydrofuran, Thiopen oder Pyrrol und diese Verbindung bis auf eine in $\alpha$-Stellung zum Ringheteroatom befindliche CH-acide Gruppe beliebig substituiert sein kann.

13. Verfahren nach einem oder mehreren der Ansprüche 1 bis 12, **dadurch gekennzeichnet, dass** mindestens eine CH-acide Bindung des Fünfringsubstrates einen $pK_a$-Wert von 20 bis 40 aufweist.

14. Verfahren nach einem oder mehreren der Ansprüche 1 bis 13, **dadurch gekennzeichnet, dass** der Wasserstoffakzeptor ausgewählt ist aus einem oder mehreren von offenkettigen oder zyklischen, nicht substituierten oder mit Alkyl oder Vinyl substituierten 1,3-Dienen oder substituierten oder nicht substituierten 1-Arylolefinen.

15. Verfahren nach einem oder mehreren der Ansprüche 1 bis 14, **dadurch gekennzeichnet, dass** der Wasserstoffakzeptor ausgewählt ist aus einem oder mehreren von Butadien, Isopren, Cyclohexadien-1,3, Styrol, Methylstyrol oder 1,1-Diphenylethen.

16. Verfahren nach einem oder mehreren der Ansprüche 1 bis 15, **dadurch gekennzeichnet, dass** die Alkalimetallkomponente ausgewählt ist aus ein oder mehreren von Lithium, Natrium, Kalium.

17. Verfahren nach einem oder mehreren der Ansprüche 1 bis 16, **dadurch gekennzeichnet, dass** die Alkalimetallkomponente als Pulver oder als Granulat eingesetzt wird.

18. Verfahren nach einem oder mehreren der Ansprüche 1 bis 17, **dadurch gekennzeichnet, dass** die Alkalimetallkomponente unmittelbar vor der Verwendung im verwendeten Lösemittel dispergiert wird.

**19.** Verfahren nach einem oder mehreren der Ansprüche 1 bis 18, **dadurch gekennzeichnet, dass** als Elektrophil eine Verbindungen eingesetzt wird, die mit carbanionischen Stoffen reagiert.

**20.** Verfahren nach einem oder mehreren der Ansprüche 1 bis 19, **dadurch gekennzeichnet, dass** als Elektrophil ein Kohlenstoff-, Bor- und/oder Siliciumelektrophil eingesetzt wird.

**21.** Verfahren nach einem oder mehreren der Ansprüche 1 bis 20, **dadurch gekennzeichnet, dass** als Borelektrophil ein Borsäureester der allgemeinen Formel $B(OR)_3$, oder Borhalogenide der allgemeinen Formel $BHal_3$, bevorzugt Trimethylborat, Triethylborat, Triisopropylborat und Tributylborat, eingesetzt wird.

**22.** Verfahren nach einem oder mehreren der Ansprüche 1 bis 20, **dadurch gekennzeichnet, dass** als Siliciumelektrophil eine Verbindungen der allgemeinen Formel $SiA_4$, bevorzugt Di- und Trialkylsiliciumhalogenide, besonders bevorzugt Trimethylchlorsilan und/oder Dimethyldichlorsilan, eingesetzt wird.

**23.** Verfahren nach einem oder mehreren der Ansprüche 1 bis 20, **dadurch gekennzeichnet, dass** das Kohlenstoffelektrophil ausgewählt ist aus ein oder mehreren von Epoxiden, Alkylhalogeniden, Arylhalogeniden, Carbonylverbindungen, Ketenen, Nitrilen, Amiden, und/oder Carbonsäuren, deren Alkalisalzen und/oder Estern.

**24.** Verfahren nach einem oder mehreren der Ansprüche 1 bis 23, **dadurch gekennzeichnet, dass** die Elektrophilkonzentration im Reaktionsgemisch zu jeder Zeit 10 % bis 500 %, bevorzugt 80 % bis 400 %, besonders bevorzugt 100 % bis 200 % der Konzentration an bis zur selben Zeit eindosiertem Fünfringheterocyclus beträgt.

**25.** Verfahren nach einem oder mehreren der Ansprüche 1 bis 24, **dadurch gekennzeichnet, dass** als Lösemittel eine aprotische organische Verbindung, bevorzugt ausgewählt aus Kohlenwasserstoffen, Ethern oder tertiäre Aminen, entweder in reiner Form oder im Gemisch, eingesetzt wird.

**26.** Verfahren nach einem oder mehreren der Ansprüche 1 bis 25, **dadurch gekennzeichnet, dass** als Lösemittel ein offenkettiger oder zyklischer Monoether oder ein Polyether, bevorzugt THF, MTHF, THP, Diethylether, Dibutylether, MTBE, 1,2-DME und/oder Diethylenglykoldimethylether, entweder in reiner Form oder im Gemisch untereinander oder im Gemisch mit Kohlenwasserstoffen, eingesetzt wird.

**27.** Verfahren nach einem oder mehreren der Ansprüche 1 bis 26, **dadurch gekennzeichnet, dass** als Lösemittel ein tertiäres Amin, bevorzugt Triethylamin, Tributylamin, Tetramethylethylendiamin (TMEDA), Pyridin, entweder in reiner Form oder im Gemisch untereinander oder im Gemisch mit Ethern und/oder Kohlenwasserstoffen, eingesetzt wird.

**28.** Verfahren nach einem oder mehreren der Ansprüche 1 bis 27, **dadurch gekennzeichnet, dass** als Lösemittel ein Kohlenwasserstoff, bevorzugt eine aliphatische oder aromatische Verbindung, besonders bevorzugt Pentan, Hexan, Cyclohexan, Heptan, Octan, Methylcyclohexan, Toluol, Ethylbenzol oder Cumol, entweder in reiner Form oder im Gemisch untereinander oder im Gemisch mit Ethern und/oder tertiären Aminen, eingesetzt wird.

**29.** Verfahren nach einem oder mehreren der Ansprüche 1 bis 28, **dadurch gekennzeichnet, dass** der Reaktionsmischung ein Phasentransferkatalysator (PTC) zugegeben wird.

**30.** Verfahren nach einem oder mehreren der Ansprüche 1 bis 29, **dadurch gekennzeichnet, dass** der PTC in Konzentrationen von 0,0001 bis 5 Mol%, bevorzugt 0,001 bis 2 mol%, besonders bevorzugt 0,01 bis 0,5 mol%, bezogen auf eingesetzte Alkalimetallkomponente, eingesetzt wird.

**31.** Verfahren nach einem oder mehreren der Ansprüche 1 bis 30, **dadurch gekennzeichnet, dass** je Mol des Fünfringsubstrates zwischen 0,25 und 10 Mol, bevorzugt zwischen 0,5 und 2 Mol der Alkalimetallkomponente, des Wasserstoffakzeptors und des Elektrophils eingesetzt werden.

**32.** Verfahren nach einem oder mehreren der Ansprüche 1 bis 31, **dadurch gekennzeichnet, dass** die Reaktionstemperaturen zwischen -80 und 100˚C, bevorzugt zwischen -20 und 50˚C, besonders bevorzugt zwischen 0 und 40˚C liegen.

**33.** Verfahren nach einem oder mehreren der Ansprüche 1 bis 32, **dadurch gekennzeichnet, dass** die Eindosierungszeiten zwischen 20 Minuten und 20 Stunden, bevorzugt zwischen einer und 10 Stunden liegen.

**34.** Verfahren nach einem oder mehreren der Ansprüche 1 bis 33, **dadurch gekennzeichnet, dass** die Nachreaktionsphase zwischen 15 Minuten und 2 Stunden dauert.

**35.** Verfahren nach einem oder mehreren der Ansprüche 1 bis 34, **dadurch gekennzeichnet, dass** die Reaktionsmischung nach vollständiger Umsetzung wässrig/sauer hydrolysiert wird und die funktionalisierte Fünfringheterocyclusverbindung durch eine oder mehrere der Operationen Filtration, Extraktion oder Destillation isoliert wird.

## Claims

**1.** Process for producing functionalised five-membered-ring heterocycles by conversion of a five-membered-ring substrate with an electrophile, a hydrogen acceptor and an alkali-metal component, **characterised in that** at any time when the hydrogen acceptor with the alkali-metal component is jointly present in the charge the five-membered-ring substrate and the electrophile are also present in the charge, likewise in at least stoichiometric quantities relative to the hydrogen acceptor, wherein the alkali-metal component consists of one alkali metal or a mixture of alkali metals.

**2.** Process according to Claim 1, **characterised in that** the alkali component is submitted in an organic solvent, and the five-membered-ring substrate, the electrophile and the hydrogen acceptor are added in arbitrary sequence or simultaneously, as well as separately or in arbitrary mixtures.

**3.** Process according to Claim 1, **characterised in that** the five-membered-ring substrate, the electrophile and the hydrogen acceptor are submitted in arbitrary sequence or simultaneously, as well as separately or in arbitrary mixtures, and the alkali-metal component is added, preferably suspended in an organic solvent.

**4.** Process according to Claim 1, **characterised in that** a five-membered-ring substrate, an electrophile and a hydrogen acceptor are added in metered amounts, either in a mixture or separately, but simultaneously, to a suspension of an alkali-metal component in an organic solvent.

**5.** Process according to Claim 1, **characterised in that** the hydrogen acceptor and the electrophile are added in metered amounts, either in a mixture or separately, but simultaneously, to the suspension of the alkali-metal component in a mixture consisting of an organic solvent and the five-membered-ring substrate.

**6.** Process according to Claim 1, **characterised in that** the five-membered-ring substrate and the hydrogen acceptor are added in metered amounts, either in a mixture or separately, but simultaneously, to the suspension of the alkali-metal component in a mixture consisting of an organic solvent and the electrophile.

**7.** Process according to Claim 1, **characterised in that** the hydrogen acceptor is added in metered amounts to the suspension of the alkali-metal component in a mixture consisting of an organic solvent, the electrophile and also the five-membered-ring substrate.

**8.** Process according to Claim 1, **characterised in that** the suspension of the alkali-metal component in an organic solvent is added in metered amounts to a mixture consisting of the hydrogen acceptor, the electrophile and the five-membered-ring suspension and, where appropriate, an organic solvent.

**9.** Process according to Claim 1, **characterised in that** the suspension of the alkali-metal component in an organic solvent and also in the electrophile and/or in the five-membered-ring substrate is added in metered amounts to a mixture consisting of the hydrogen acceptor and/or the electrophile and/or the five-membered-ring substrate.

**10.** Process according to one or more of Claims 1 to 9, **characterised in that** the five-membered-ring substrate is a CH-acidic five-membered-ring heterocycle.

**11.** Process according to one or more of Claims 1 to 10, **characterised in that** the five-membered-ring substrate exhibits in the $\alpha$-position relative to at least one ring heteroatom at least one CH-acidic group, the C-atom of which is $sp^2$-hybridised.

**12.** Process according to one or more of Claims 1 to 11, **characterised in that** the five-membered-ring substrate is

selected from furan, 2,3-dihydrofuran, thiophene or pyrrole, and this compound may be arbitrarily substituted, except for a CH-acidic group located in the α-position relative to the ring heteroatom.

**13.** Process according to one or more of Claims 1 to 12, **characterised in that** at least one CH-acidic bond of the five-membered-ring substrate exhibits a $pK_a$ value from 20 to 40.

**14.** Process according to one or more of Claims 1 to 13, **characterised in that** the hydrogen acceptor is selected from one or more of open-chain or cyclic, non-substituted 1,3-dienes or 1,3-dienes substituted with alkyl or vinyl, or substituted or non-substituted 1-arylolefins.

**15.** Process according to one or more of Claims 1 to 14, **characterised in that** the hydrogen acceptor is selected from one or more of butadiene, isoprene, cyclohexadiene-1,3, styrene, methylstyrene or 1,1-diphenylethylene.

**16.** Process according to one or more of Claims 1 to 15, **characterised in that** the alkali-metal component is selected from one or more of lithium, sodium, potassium.

**17.** Process according to one or more of Claims 1 to 16, **characterised in that** the alkali-metal component is employed in the form of powder or in the form of granulate.

**18.** Process according to one or more of Claims 1 to 17, **characterised in that** the alkali-metal component is dispersed in the solvent being used immediately prior to use.

**19.** Process according to one or more of Claims 1 to 18, **characterised in that** a compound that reacts with carbanionic substances is employed by way of electrophile.

**20.** Process according to one or more of Claims 1 to 19, **characterised in that** a carbon, boron and/or silicon electrophile is employed by way of electrophile.

**21.** Process according to one or more of Claims 1 to 20, **characterised in that** a boric acid ester of the general formula $B(OR)_3$ or boron halides of the general formula $BHal_3$, preferably trimethyl borate, triethyl borate, triisopropyl borate and tributyl borate, is employed by way of boron electrophile.

**22.** Process according to one or more of Claims 1 to 20, **characterised in that** a compound of the general formula $SiA_4$, preferably dialkylsilicon halides and trialkylsilicon halides, particularly preferably trimethylchlorosilane and/or dimethyldichlorosilane, is employed by way of silicon electrophile.

**23.** Process according to one or more of Claims 1 to 20, **characterised in that** the carbon electrophile is selected from one or more of epoxides, alkyl halides, aryl halides, carbonyl compounds, ketenes, nitriles, amides and/or carboxylic acids, the alkali salts and/or esters thereof.

**24.** Process according to one or more of Claims 1 to 23, **characterised in that** the electrophile concentration in the reaction mixture at any time amounts to 10 % to 500 %, preferably 80 % to 400 %, particularly preferably 100 % to 200 %, of the concentration of five-membered-ring heterocycle added in metered amounts up until the same time.

**25.** Process according to one or more of Claims 1 to 24, **characterised in that** an aprotic organic compound, preferably selected from hydrocarbons, ethers or tertiary amines, either in pure form or in a mixture, is employed by way of solvent.

**26.** Process according to one or more of Claims 1 to 25, **characterised in that** an open-chain or cyclic monoether or a polyether, preferably THF, MTHF, THP, diethyl ether, dibutyl ether, MTBE, 1,2-DME and/or diethylene glycol dimethyl ether, either in pure form or in a mixture with one another or in a mixture with hydrocarbons, is employed by way of solvent.

**27.** Process according to one or more of Claims 1 to 26, **characterised in that** a tertiary amine, preferably triethylamine, tributylamine, tetramethylethylenediamine (TMEDA), pyridine, either in pure form or in a mixture with one another or in a mixture with ethers and/or hydrocarbons, is employed by way of solvent.

**28.** Process according to one or more of Claims 1 to 27, **characterised in that** a hydrocarbon, preferably an aliphatic

or aromatic compound, particularly preferably pentane, hexane, cyclohexane, heptane, octane, methylcyclohexane, toluene, ethylbenzene or cumene, either in pure form or in a mixture with one another or in a mixture with ethers and/or tertiary amines, is employed by way of solvent.

**29.** Process according to one or more of Claims 1 to 28, **characterised in that** a phase-transfer catalyst (PTC) is added to the reaction mixture.

**30.** Process according to one or more of Claims 1 to 29, **characterised in that** the PTC is employed in concentrations from 0.0001 mol% to 5 mol%, preferably 0.001 mol% to 2 mol%, particularly preferably 0.01 mol% to 0.5 mol%, relative to the alkali-metal component employed.

**31.** Process according to one or more of Claims 1 to 30, **characterised in that** between 0.25 mol and 10 mol, preferably between 0.5 mol and 2 mol, of the alkali-metal component, of the hydrogen acceptor and of the electrophile are employed per mole of the five-membered-ring substrate.

**32.** Process according to one or more of Claims 1 to 31, **characterised in that** the reaction temperatures are between -80 ˚C and 100 ˚C, preferably between -20 ˚C and 50 ˚C, particularly preferably between 0 ˚C and 40 ˚C.

**33.** Process according to one or more of Claims 1 to 32, **characterised in that** the metering-times are between 20 minutes and 20 hours, preferably between one hour and 10 hours.

**34.** Process according to one or more of Claims 1 to 33, **characterised in that** the post-reaction phase lasts for between 15 minutes and 2 hours.

**35.** Process according to one or more of Claims 1 to 34, **characterised in that** after complete conversion the reaction mixture is hydrolysed by aqueous/acid means and the functionalised five-membered-ring heterocyclic compound is isolated by one or more of the operations constituted by filtration, extraction or distillation.

## Revendications

**1.** Procédé de préparation d'hétérocycles à cinq chaînons fonctionnalisés, par réaction d'un substrat cyclique à cinq chaînons avec un électrophile, un accepteur d'hydrogène et un composant métal alcalin, **caractérisé en ce que**, à tout moment où l'accepteur d'hydrogène se trouve présent dans le mélange réactionnel conjointement avec le composant métal alcalin, le substrat cyclique à cinq chaînons et l'électrophile se trouvent eux aussi présents dans ce mélange, en quantités au moins stoechiométriques par rapport à l'accepteur d'hydrogène, le composant métal alcalin étant constitué d'un métal alcalin ou d'un mélange de métaux alcalins.

**2.** Procédé conforme à la revendication 1, **caractérisé en ce qu'**on met d'abord le composant métal alcalin dans un solvant organique, puis on y ajoute le substrat cyclique à cinq chaînons, l'électrophile et l'accepteur d'hydrogène, dans n'importe quel ordre, ou simultanément et séparément ou en n'importe quel mélange.

**3.** Procédé conforme à la revendication 1, **caractérisé en ce que** le substrat cyclique à cinq chaînons, l'électrophile et l'accepteur d'hydrogène sont d'abord mis ensemble dans n'importe quel ordre, ou simultanément et séparément ou en n'importe quel mélange, et l'on y ajoute le composant métal alcalin, de préférence en suspension dans un solvant organique.

**4.** Procédé conforme à la revendication 1, **caractérisé en ce qu'**on ajoute un substrat cyclique à cinq chaînons, un électrophile et un accepteur d'hydrogène, à l'état de mélange ou séparément mais simultanément, à une suspension d'un composant métal alcalin dans un solvant organique.

**5.** Procédé conforme à la revendication 1, **caractérisé en ce qu'**on ajoute l'accepteur d'hydrogène et l'électrophile, à l'état de mélange ou séparément mais simultanément, à une suspension du composant métal alcalin dans un mélange constitué d'un solvant organique et du substrat cyclique à cinq chaînons.

**6.** Procédé conforme à la revendication 1, **caractérisé en ce qu'**on ajoute l'accepteur d'hydrogène et le substrat cyclique à cinq chaînons, à l'état de mélange ou séparément mais simultanément, à une suspension du composant métal alcalin dans un mélange constitué d'un solvant organique et de l'électrophile.

**7.** Procédé conforme à la revendication 1, **caractérisé en ce qu'**on ajoute l'accepteur d'hydrogène à une suspension du composant métal alcalin dans un mélange constitué d'un solvant organique, de l'électrophile et du substrat cyclique à cinq chaînons.

**8.** Procédé conforme à la revendication 1, **caractérisé en ce qu'**on ajoute une suspension du composant métal alcalin dans un solvant organique à un mélange constitué de l'accepteur d'hydrogène, de l'électrophile et du substrat cyclique à cinq chaînons, et le cas échéant, d'un solvant organique.

**9.** Procédé conforme à la revendication 1, **caractérisé en ce qu'**on ajoute une suspension du composant métal alcalin dans un solvant organique ainsi que dans de l'électrophile et/ou dans du substrat cyclique à cinq chaînons, à un mélange constitué de l'accepteur d'hydrogène et/ou de l'électrophile et/ou du substrat cyclique à cinq chaînons.

**10.** Procédé conforme à l'une ou plusieurs des revendications 1 à 9, **caractérisé en ce que** le substrat cyclique à cinq chaînons est un hétérocycle à cinq chaînons et à groupe CH acide.

**11.** Procédé conforme à l'une ou plusieurs des revendications 1 à 10, **caractérisé en ce que** le substrat cyclique à cinq chaînons comporte, en position $\alpha$ par rapport à au moins un hétéroatome de cycle, au moins un groupe CH acide dont l'atome de carbone est hybridé $sp^2$

**12.** Procédé conforme à l'une ou plusieurs des revendications 1 à 11, **caractérisé en ce que** le substrat cyclique à cinq chaînons est choisi parmi les furane, 2,3-dihydro-furane, thiophène et pyrrole, ces composés pouvant porter n'importe quel(s) substituant(s) sauf au niveau d'un groupe CH acide situé en position $\alpha$ par rapport à l'hétéroatome du cycle.

**13.** Procédé conforme à l'une ou plusieurs des revendications 1 à 12, **caractérisé en ce qu'**au moins une liaison CH acide du substrat cyclique à cinq chaînons présente un pKa de 20 à 40.

**14.** Procédé conforme à l'une ou plusieurs des revendications 1 à 13, **caractérisé en ce que** l'accepteur d'hydrogène est choisi, au nombre d'un ou plus, parmi les 1,3-diènes cycliques ou à chaîne ouverte, sans substituant(s) ou porteur de substituant(s) alkyle ou vinyle, et les 1-aryl-oléfines avec ou sans sub-stituant(s).

**15.** Procédé conforme à l'une ou plusieurs des revendications 1 à 14, **caractérisé en ce que** l'accepteur d'hydrogène est choisi parmi les butadiène, isoprène, cyclohexa-1,3-diène, styrène, méthyl-styrène et 1,1-diphényl-éthène, au nombre d'un ou plus.

**16.** Procédé conforme à l'une ou plusieurs des revendications 1 à 15, **caractérisé en ce que** le composant métal alcalin est choisi parmi les lithium, sodium et potassium, au nombre d'un ou plus.

**17.** Procédé conforme à l'une ou plusieurs des revendications 1 à 16, **caractérisé en ce que** le composant métal alcalin est utilisé à l'état de poudre ou de granulat.

**18.** Procédé conforme à l'une ou plusieurs des revendications 1 à 17, **caractérisé en ce que** c'est juste avant d'être utilisé que le composant métal alcalin est dispersé dans le solvant utilisé.

**19.** Procédé conforme à l'une ou plusieurs des revendications 1 à 18, **caractérisé en ce que** l'on utilise comme électrophile un composé qui réagit avec les substances de nature carbanionique.

**20.** Procédé conforme à l'une ou plusieurs des revendications 1 à 19, **caractérisé en ce que** l'on utilise comme électrophile un électrophile au carbone, au bore et/ou au silicium.

**21.** Procédé conforme à l'une ou plusieurs des revendications 1 à 20, **caractérisé en ce que** l'on utilise, en tant qu'électrophile au bore, un ester d'acide borique de formule générale $B(OR)_3$ ou un halogénure de bore de formule générale $BHal_3$, et de préférence du borate de triméthyle, du borate de triéthyle, du borate de triisopropyle ou du borate de tributyle.

**22.** Procédé conforme à l'une ou plusieurs des revendications 1 à 20, **caractérisé en ce que** l'on utilise, en tant qu'électrophile au silicium, un composé de formule générale $SiA_4$, et de préférence un halogénure de dialkyl-silicium ou de trialkyl-silicium, et en particulier, du triméthyl-chloro-silane et/ou du diméthyl-dichloro-silane.

**23.** Procédé conforme à l'une ou plusieurs des revendications 1 à 20, **caractérisé en ce que** l'électrophile au carbone est choisi, au nombre d'un ou plus, parmi les époxydes, halogénures d'alkyle, halogénures d'aryle, composés carbonylés, cétènes, nitriles, amides et/ou acides carboxyliques, et sels de métal alcalin et/ou esters de ces derniers.

**24.** Procédé conforme à l'une ou plusieurs des revendications 1 à 23, **caractérisé en ce que** la concentration d'électrophile dans le mélange réactionnel vaut à chaque instant de 10 à 500 %, de préférence de 80 à 400 % et en particulier de 100 à 200 % de la concentration de l'hétérocycle à cinq chaînons introduit jusqu'au même instant.

**25.** Procédé conforme à l'une ou plusieurs des revendications 1 à 24, **caractérisé en ce qu'**on utilise comme solvant un composé organique aprotique, choisi de préférence parmi les hydrocarbures, les éthers et les amines tertiaires, à l'état pur ou à l'état de mélange.

**26.** Procédé conforme à l'une ou plusieurs des revendications 1 à 25, **caractérisé en ce que** l'on utilise comme solvant un monoéther à chaîne ouverte ou cyclique ou un polyéther, de préférence du tétrahydrofurane (THF), du 2-méthyl-tétrahydrofurane (MTHF), du tétrahydropyrane (THP), de l'éther diéthylique, de l'éther dibutylique, du méthyl-tertiobutyl-éther (MTBE), du 1,2-diméthoxy-éthane (1,2-DME) et/ou de l'éther diméthylique de diéthylèneglycol, soit à l'état pur, soit à l'état de mélange les uns avec les autres ou de mélange avec des hydrocarbures.

**27.** Procédé conforme à l'une ou plusieurs des revendications 1 à 26, **caractérisé en ce que** l'on utilise comme solvant une amine tertiaire, de préférence de la triéthyl-amine, de la tributyl-amine, de la tétraméthyl-éthylène-diamine (TMEDA) ou de la pyridine, soit à l'état pur, soit à l'état de mélange les unes avec les autres ou de mélange avec des éthers et/ou des hydrocarbures.

**28.** Procédé conforme à l'une ou plusieurs des revendications 1 à 27, **caractérisé en ce que** l'on utilise comme solvant un hydrocarbure, de préférence un composé aliphatique ou aromatique et en particulier du pentane, de l'hexane, du cyclohexane, de l'heptane, de l'octane, du méthyl-cyclohexane, du toluène, de l'éthyl-benzène ou du cumène, soit à l'état pur, soit à l'état de mélange les uns avec les autres ou de mélange avec des éthers et/ou des amines tertiaires.

**29.** Procédé conforme à l'une ou plusieurs des revendications 1 à 28, **caractérisé en ce que** l'on ajoute au mélange réactionnel un agent de catalyse par transfert entre phases (CTP).

**30.** Procédé conforme à l'une ou plusieurs des revendications 1 à 29, **caractérisé en ce que** l'on introduit l'agent de catalyse par transfert entre phases (CTP) en une concentration de 0,0001 à 5 % en moles, de préférence de 0,001 à 2 % en moles et en particulier de 0,01 à 0,5 % en moles, par rapport au composant métal alcalin introduit.

**31.** Procédé conforme à l'une ou plusieurs des revendications 1 à 30, **caractérisé en ce que** l'on utilise, par mole du substrat cyclique à cinq chaînons, de 0,25 à 10 moles et de préférence de 0,5 à 2 moles du composant métal alcalin, de l'accepteur d'hydrogène et de l'électrophile.

**32.** Procédé conforme à l'une ou plusieurs des revendications 1 à 31, **caractérisé en ce que** la température de réaction se situe entre -80 et 100 °C, de préférence entre -20 et 50C et en particulier entre 0 et 40 °C.

**33.** Procédé conforme à l'une ou plusieurs des revendications 1 à 32, **caractérisé en ce que** les opérations d'addition durent de 20 minutes à 20 heures, et de préférence de 1 à 10 heures.

**34.** Procédé conforme à l'une ou plusieurs des revendications 1 à 33, **caractérisé en ce que** la phase de poursuite et d'achèvement de la réaction dure de 15 minutes à 2 heures

**35.** Procédé conforme à l'une ou plusieurs des revendications 1 à 34, **caractérisé en ce que**, une fois que la conversion est complète, on soumet le mélange réactionnel à une hydrolyse en milieu aqueux acide, et l'on isole le composé hétérocyclique à cinq chaînons fonctionnalisé en effectuant une ou plusieurs opérations de filtration, d'extraction et/ou de distillation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19849197 C
- DE 10150615 A
- EP 1403271 A


### In der Beschreibung aufgeführte Nicht-Patentliteratur


- **W.T. Thompson ; J. Gaudino.** *J. Org. Chem.,* 1984, vol. 49, 5237-5243
- **W. Li ; D.P. Nelson ; M.S. Jensen ; R.S. Hoerrner ; D. Cai ; R.D. Larsen ; P.J. Reider.** *J. Org. Chem.,* 2002, vol. 67, 5394-5397